## Europäisches Patentamt

## European Patent Office

## Office européen des brevets

(11) Veröffentlichungsnummer: **0 166 160**
**B1**

(12) # EUROPÄISCHE PATENTSCHRIFT

(45) Veröffentlichungstag der Patentschrift:
**14.12.88**

(51) Int. Cl.⁴: **F 02 M 37/22,** F 02 M 31/16,
B 01 D 27/08, B 01 D 27/10

(21) Anmeldenummer: **85105971.7**

(22) Anmeldetag: **15.05.85**

(54) **Filter für Dieselkraftstoff.**

(30) Priorität: **22.06.84 DE 3422979**

(43) Veröffentlichungstag der Anmeldung:
**02.01.86 Patentblatt 86/1**

(45) Bekanntmachung des Hinweises auf die Patenterteilung:
**14.12.88 Patentblatt 88/50**

(84) Benannte Vertragsstaaten:
**DE FR GB IT**

(56) Entgegenhaltungen:
**EP-A-0 145 986**
**DE-A-3 330 057**
**FR-A-2 490 733**
**FR-A-2 544 021**
**GB-A-1 584 517**
**GB-A-2 121 696**

(73) Patentinhaber: **ROBERT BOSCH GMBH, Postfach 50, D-7000 Stuttgart 1 (DE)**

(72) Erfinder: **Bosch, Franz- Ulrich, Dipl.- Ing., Eduard- Steinle- Strasse 36, D-7000 Stuttgart 75 (DE)**
Erfinder: **Müller, Willi, Wiesenstrasse 38, D-7247 Sulz- Sigmarswangen (DE)**
Erfinder: **Schacht, Hans, Leharstrasse 12, D-7000 Stuttgart 1 (DE)**
Erfinder: **Straubel, Max, Dr., Ontariostrasse 30b, D-7000 Stuttgart 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einem Filter für Dieselkraftstoff nach der im Oberbegriff des Anspruchs 1 näher angegebenen Gattung.

Es ist schon ein solches Filter für Dieselkraftstoff aus der FR-A-2 490 733 bekannt, bei der in einem Deckel eines Filter-Gehäuses eine Einrichtung zur temperaturabhängigen Umsteuerung der Überströmmenge einer Einspritzpumpe sowie eine Entlüftungsvorrichtung zum Abführen von Gaseinschlüssen aus der Überströmmenge zum Tank integriert sind. Der vier Anschlüsse aufweisende Deckel ist als dickes Gußteil ausgebildet, in den mehrere Kammern in radial übereinander verlaufenden Ebenen angeordnet sind, wobei zu diesen Kammern die vier Anschlüsse radial und axial heranführen. Dieser aufwendige Deckel baut derart kostspielig, daß er sich nicht für Leitungsfilter eignet, die als Ganzes ausgetauscht und weggeworfen werden. Ferner weist die Einrichtung zur temperaturabhängigen Umsteuerung eine raumaufwendige Bimetall-Spiralfeder auf, die ihrerseits als Steuerglied eines Umsteuerventils eine schwenkbare Ventilscheibe betätigt. Dieses auf der Zulaufseite liegende Umsteuerventil ist nicht nur verschmutzungsanfällig, sondern arbeitet auch träge, da die Bimetallspiralfeder im Hauptstrom liegt und entweder den vom Tank kommenden Dieselkraftstoff oder einem Mischstrom aus letzteren und der Überströmmenge der Einspritzpumpe ausgesetzt ist. Die mehrschichtige Kammeranordnung im Deckel beeinträchtigt ferner einen guten Wärmeübergang von der Überströmmenge zum Kraftstoff im becherförmigen Gehäuseteil.

Ferner ist ein Filter für Dieselkraftstoff aus der DE-A-3 330 057 bekannt, das neben einer Einrichtung zur temperaturabhängigen Umsteuerung der Überströmmenge einer Einspritzpumpe auch eine Entlüftungsvorrichtung zum Abführen von Gaseinschlüssen aus der Überströmmenge zum Tank aufweist. Von Nachteil bei diesem Filter ist vor allem, daß es in Wechselfilterbauart ausgebildet ist, bei dem bei verschmutztem Filterelement eine Filterpatrone von einem die Anschlüsse aufweisenden Deckel abgeschraubt und erneuert wird. Die Einrichtungen für die temperaurabhängige Umsteuerung und für die Entlüftung sind dabei in dem vier Anschlüsse aufweisenden Deckel untergebracht, der in einem Kraftfahrzeug gehäusefest montiert ist und nicht ausgetauscht wird. Nachteilig ist ferner die aufwendige Bauweise der Einrichtung zur temperaturabhängigen Umsteuerung, die mit einem Ventil arbeitet, das von einem die Dichte des zurückgeführten Kraftstoffs messenden Schwimmer gesteuert wird. In Reihe zu diesem Ventil liegt für die temperaturabhängige Umsteuerung ein Thermostatventil, dessen Thermostat auf der Reinseite des Filterelements liegt und damit zu einer Einrichtung mit beträchtlicher Hysterese führt. Auch der nahezu ungedrosselte Durchgang der von der Einspritzpumpe kommenden Überströmmenge durch die Umsteuereinrichtung und durch die Entlüftungsvorrichtung zum Tank ist häufig in der Praxis unvorteilhaft. Der Deckel bei diesem Wechselfilter baut daher derart aufwendig und kostspielig, daß er sich nicht für Leitungsfilter eignet, die als Ganzes ausgetauscht und weggeworfen werden.

Ferner ist aus der GB-A-1 584 517 ein Leitungsfilter bekannt, bei dem ein den Zulaufanschluß und den Ablaufanschluß aufweisender Deckel mit einem das Filterelement aufnehmenden becherförmigen Gehäuseteil unlösbar miteinander verbunden sind und das bei verschmutztem Filterelement als Ganzes ausgetauscht wird. Dieses Filter baut zwar einfach, billig und kompakt, weist aber keine Einrichtung zur temperaturabhängigen Umsteuerung der Überströmmenge einer Einspritzpumpe mit einer zugehörigen Entlüftungsvorrichtung auf.

Ferner wurde in einer unter Artikel 54(3) fallenden älteren Anmeldung nach EP-A-145 986 bereits eine Einrichtung zur temperaturabhängigen Umschaltung der Überströmmenge einer Diesel-Einspritzpumpe vorgeschlagen, die hysteresearm und verschleißarm arbeitet und eine wirksame Erwärmung des Dieselkraftstoffs zur Vermeidung von Wachskristallisation bei tiefen Temperaturen ermöglicht. Diese Einrichtung arbeitet bereits mit einer Bimetall-Schnappscheibe als bewegliches Steuerglied im Überströmventil, mit einer dazu parallel geschalteten Drosselöffnung zur Dauerentlüftung und mit einem zur Schmutzseite des Filters hin öffnenden Drucksteuerventil. Diese Einrichtung ist jedoch in einem gesonderten Gehäuse angeordnet, das über eine Hohlschraube an einem Deckel eines Wechselfilters montierbar ist. Diese Einrichtung eignet sich daher in dieser Form schlecht für ein Leitungsfilter, das als Wegwerfteil möglichst billig und auch kompakt bauen soll.

### Vorteile der Erfindung

Das erfindungsgemäße Filter für Dieselkraftstoff mit den kennzeichnenden Merkmalen des Hauptanspruchs hat demgegenüber den Vorteil, daß bei ihm die Einrichtung für die Kraftstoffrückführung und für die Entlüftung in einem Leitungsfilter so integriert sind, daß eine besonders kompakte und einfache Bauweise erreicht wird, die zudem montagefreundlich ist. Die einfache Bauweise ermöglicht zudem eine kostengünstige Lösung, was bei dem als Wegwerfteil gedachten Leitungsfilter von erheblicher Bedeutung ist. Bisherige Filterbauteile können bei der erfindungsgemäßen Filterbauart weitgehend weiter verwendet werden. Durch die besondere Ausbildung und Anordnung der Einrichtung zur Kraftstoffrückführung im Innern des Gehäuses am Deckel läßt sich ferner eine optimale Wärmeübertragung bzw. Wärmeabstrahlung auf das Filterelement erreichen. Weiterhin gewährleistet die Anordnung und Ausbildung der Einrichtung eine wirksame Entlüftung bei den unterschiedlichsten Betriebsbedingungen. Die Lage der Bimetall-Schnappscheibe in der Kammer ermöglicht eine günstige Anströmung durch die erwärmte Überströmmenge und begünstigt dadurch einen hysteresearmen Betrieb.

Durch die in den Unteransprüchen aufgeführten Maßnahmen sind Vorteilhafte Weiterbildungen und Verbesserungen des im Hauptanspruch angegebenen Filters möglich, wodurch vor allem dessen platzsparende und kostengünstige Bauweise verbessert wird.

## Zeichnung

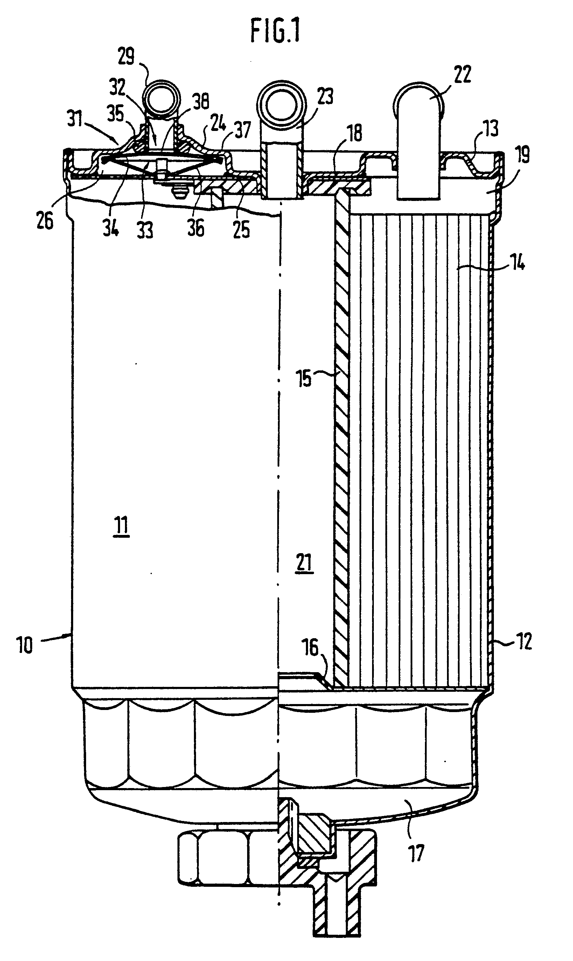

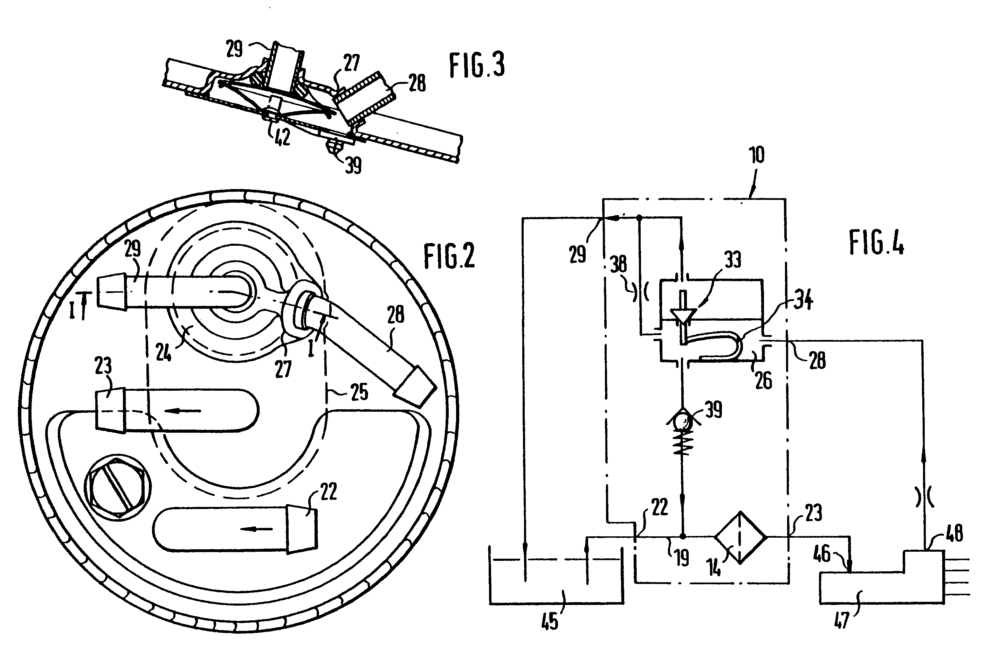

Ein Ausführungsbeispiel der Erfindung ist in der Zeichnung dargestellt und in der nachfolgenden Beschreibung näher erläutert. Es zeigen Figur 1 einen Längsschnitt durch ein Filter für Dieselkraftstoff, Figur 2 eine Draufsicht auf das Filter, Figur 3 einen teilweisen Längsschnitt nach Linie I - I in Figur 2 und Figur 4 ein Schaltschema des Leitungsfilters nach Figur 1.

## Beschreibung des Ausführungsbeispieles

Die Figur 1 zeigt einen teilweisen Längsschnitt durch ein Filter 10 für Dieselkraftstoff, das als Leitungsfilter ausgebildet ist. Das Filter 10 hat ein Gehäuse 11, das aus einem becherförmigen Gehäuseteil 12 und einem Deckel 13 besteht, die an ihren Rändern dicht miteinander verschweißt sind.

Das Gehäuseteil 12 nimmt ein axial durchströmtes Filterelement 14 auf, dessen Filterpapierbahn spiralig um ein Mittelrohr 15 aufgewickelt ist. Das Mittelrohr 15 liegt mit seinem unteren Rand an einem Stützblech 16 an, das sich oberhalb eines Wasserspeicherraums 17 an einer Schulter im Gehäuseteil 12 abstützt. Am oberen Rand des Mittelrohrs 15 übernimmt ein Flachdichtring 18 die Trennung zwischen einer Schmutzseite 19 und einer Reinseite 21.

Der Deckel 13 des Leitungsfilters 10 besteht aus einem relativ dünnwandigen Stahlblech, in dem ein Zulaufanschluß 22 sowie ein Ablaufanschluß 23 befestigt sind. Beide Anschlüsse 22, 23 sind als abgewinkelte Rohrstutzen jeweils für Schlauchanschluß ausgebildet, wobei der Ablaufanschluß 23 koaxial zur Längsachse des Filters 10 im Deckel 13 befestigt ist, während der Zulaufanschluß 22 dazu radial versetzt im Deckel 13 angeordnet ist und zur Schmutzseite 19 führt.

Im Deckel 13 ist diametral zum Zulaufanschluß 22 eine nach außen gewölbte, im wesentlichen kreisförmige Ausformung 24 ausgebildet. Im Innern des Gehäuses 11 ist mit dem Deckel 13 eine ebene und dünne Abdeckplatte 25 durch Klebung bzw. Schweißung dicht und fest verbunden. Wie Figur 1 in Verbindung mit Figur 2 näher zeigt, ist die Außenform der Abdeckplatte 25 so gewählt, daß sie zusammen mit der Ausformung 24 eine von der Schmutzseite 19 getrennte Kammer 26 bildet. Wie Figur 2 in Verbindung mit Figur 3 näher zeigt, hat die im wesentlichen kreisförmige Ausformung 24 eine seitliche Ausbuchtung 27, in der ein dritter Anschluß 28 befestigt ist. Diesem dritten Anschluß 28 wird die von einer Einspritzpumpe kommende, erwärmte Überströmmenge des Dieselkraftstoffs zugeführt. Der dritte Anschluß 28 ist ebenfalls als abgewinkelter Rohrstutzen für Schlauchanschluß ausgebildet, und in der Ausformung 24 so angeordnet, daß die dort ankommende Überströmmenge am äußeren Rand der Kammer 26 schräg einströmt. Zentrisch in der Ausformung 24 ist ferner ein vierter Anschluß 29 angeordnet, der ebenfalls als abgewinkelter Rohrstutzen für Schlauchanschluß ausgebildet ist und parallel zum Rohrstutzen des Ablaufanschlusses 22 verläuft. Dieser vierte Anschluß 29 steht mit dem Tank für Dieselkraftstoff in Verbindung. Wie Figur 1 besonders deutlich zeigt, liegen der dritte und vierte Anschluß 28 bzw. 29 in derselben radialen Ebene, bezogen zur Längsachse des Filters 10, wie der Zulaufanschluß 22 und der Ablaufanschluß 23. Die kompakte Bauform des Filters 10 wird damit beibehalten.

In der im Deckel 13 gebildeten Kammer 26 ist eine Einrichtung 31 zur temperaturabhängigen Umsteuerung der von einer Einspritzpumpe kommenden, erwärmten Überströmmenge in einen Kraftstofftank sowie eine Entlüftungsvorrichtung 32 zum Abführen von Gaseinschlüssen aus der Überströmmenge zum Tank vorgesehen.

Die Einrichtung 31 besteht im wesentlichen aus einem Umsteuerventil 33, dessen bewegliches Steuerglied als kreisförmige Bimetall-Schnappscheibe 34 und dessen zugehöriger, gehäusefester Ventilsitz als O-Ring 35 ausgebildet sind. Der O-Ring 35 ist in seiner Lage durch die Innenwand der Ausformung 24 und durch das in die Kammer 26 hineinragende, aufgeweitete Ende des Rohrstutzens des vierten Anschlusses 29 gehalten. Eine an der Abdeckplatte 25 befestigte Haltefeder 36 stützt sich am äußeren Durchmesser der Bimetall-Scheibe 34 ab und drückt sie in der gezeichneten Sperrstellung auf ihren Ventilsitz 35, wobei die Bimetall-Scheibe 34 in einem mittleren Durchmesserbereich am O-Ring 35 anliegt. Die Bimetall-Scheibe 34 liegt dabei mit ihrem äußeren Rand im Abstand von einer Schulter 37 der Ausformung 24. Die Bimetall-Scheibe 34 ist zudem mit ihrem äußeren Rand in dem kurzen zylindrischen Bereich der Ausformung 24 radial geführt.

Die Entlüftungsvorrichtung 32 besteht aus einer Drosselöffnung 38, die in der Bimetall-Scheibe 34 zentrisch angeordnet ist und somit eine stetige, gedrosselte Verbindung zwischen dem dritten (28) und dem vierten Anschluß 29 herstellt. Die Drosselöffnung 38 ist somit parallel zum Umsteuerventil 33 zwischen die beiden Anschlüsse 28, 29 geschaltet.

An der Abdeckplatte 25 ist ein Drucksteuerventil 39 angeordnet, das die Verbindung zwischen der Kammer 26 und der Schmutzseite 19 steuert und nur zu letzterer hin öffnen kann. Dieses Drucksteuerventil 39 ist als billig bauendes Plattenventil ausgebildet, das einen niedrigen Öffnungsdruck von ca. 0,4 bar aufweist. Wie aus Figur 3 näher erkennbar ist, wird das Plattenventil 39 sowie die vierarmige Haltefeder 36 für die Bimetall-Scheibe 34 von einer einzigen Niete 42 an der Abdeckplatte 25 gehalten.

Die Figur 4 zeigt in vereinfachter Weise das Schaltschema des Leitungsfilters 10 nach Figur 1, wobei für gleiche Bauelemente gleiche Bezugszeichen verwendet werden.

Der Zulaufanschluß 22 des Filters 10 erhält Dieselkraftstoff aus einem Tank 45. Der Ablaufanschluß 23 am Filter 10 ist mit dem Eingang 46 einer Einspritzpumpe 47 verbunden, deren Überströmausgang 48 mit dem dritten Anschluß 28 Verbindung hat. Die über den Anschluß 28 in die Kammer 26 gelangende, erwärmte Überströmmenge kann einmal über das temperaturgesteuerte Umsteuerventil 33 zum vierten Anschluß 29 und weiter zum Tank 45 strömen, oder parallel dazu über das Drucksteuerventil 39 auf die Schmutzseite 19 des Filterelements 14 gelangen. Parallel zum Umsteuerventil 33 liegt zwischen den Anschlüssen 28 und 29 die Drosselöffnung 38 als ein Teil der Entlüftungsvorrichtung 32.

Die Wirkungsweise des Filters 10 wird wie folgt erläutert, wobei die grundsätzliche Funktion der Einrichtung 31 zur temperaturabhängigen Umsteuerung der von der Einspritzpumpe kommenden Überströmmenge und der Entlüftungsvorrichtung 32 als an sich bekannt aus der älteren Anmeldung EP-A-145 986 der Anmelderin vorausgesetzt wird, so daß hier nur kurz darauf eingegangen wird.

Der vom Tank 45 über den Zulaufanschluß 22 fließende Dieselkraftstoff wird im Filterelement 14 gereinigt und strömt nach Abscheidung von Wasser im Wasserspeicherraum 17 über den Ablaufanschluß 23 zur Einspritzpumpe 47. Von ihr gelangt eine erwärmte Überströmmenge zum dritten Anschluß 28 des Filters 10 und damit in die Kammer 26. Die Bimetall-Scheibe 34 ist nun so ausgelegt, daß sie bei einer Temperatur von unterhalb ca. 15° C in der Überströmmenge ihre gezeichnete Sperrstellung einnimmt, wobei die Haltefeder 36 die Bimetall-Scheibe 34 lediglich auf den O-Ring 35 drückt und damit die Verbindung zum Tank 45 sperrt. Die über den dritten Anschluß 28 schräg in die Kammer 26 einströmende Überströmmenge prallt direkt auf die Bimetall-Scheibe 34, so daß die zugeführte Wärme auf die fast allseitig benetzte Bimetall-Scheibe 34 gut übertragen wird. Bei geschlossenem Umsteuerventil 33 strömt der größte Teil der Überströmmenge über das geöffnete Drucksteuerventil 39 auf die Schmutzseite 19 des Filters 10 und vermengt sich dort mit dem aus dem Kraftstofftank 45 angesaugten, kalten Kraftstoff, um derart eine Wachskristallisation im Filterelement 14 bei niedrigen Temperaturen möglichst zu vermeiden.

Bei geschlossenem Umsteuerventil 33 fließt von der ankommenden Überströmmenge stets ein kleiner Teilstrom kontinuierlich über die Drosselöffnung 38 zum Tank 45 ab und sorgt dadurch für einwandfreie Entlüftung bei den verschiedensten Betriebsbedingungen.

Erreicht die in der Kammer 26 ankommende Überströmmenge der Einspritzpumpe 48 eine Temperatur von z. B. 40° C so schnappt die leicht durchgewölbte Bimetall-Scheibe 34 aus der gezeichneten Sperrstellung in eine Offenstellung, wobei sie mit ihrem mittleren Durchmesserbereich von dem O-Ring 35 abhebt und damit die Verbindung von dem dritten Anschluß 28 zum vierten Anschluß 29 und damit zum Tank freigibt. Die in der Offenstellung nun nach der entgegengesetzten Seite durchgewölbte Bimetall-Scheibe 34 liegt mit ihrem äußeren Rand nun durch die Kraft der Haltefeder 36 an der Schulter 37 an. Trotz dieser Anlage ist durch die Ausbuchtung 27 in der Ausformung 24 ein ausreichender Durchflußquerschnitt zwischen den beiden Anschlüssen 28 und 29 hergestellt. Zugleich ist die Bimetall-Scheibe 34 in dem zylindrischen Bereich der Ausformung 24 seitlich geführt.

Das Plattenventil 39 mit seinem niedrigen Öffnungsdruck verhindert, daß bei leergefahrenem Tank Luft in das Filterelement 14 gelangt. Zugleich verhindert es auch, daß von der Überströmmenge mitgeführte Luft auf die Schmutzseite 19 des Filters 10 gelangt.

Die Einrichtung zur temperaturabhängigen Umsteuerung der Überströmmenge einer Einspritzpumpe sowie die Entlüftungsvorrichtung sind somit in einfacher, billiger und kompakter Bauweise im Leitungsfilter integriert. Durch diese Kompaktbauweise läßt sich im Filter 10 eine optimale Wärmeübertragung bzw. Abstrahlung auf das Filterelement 14 erreichen. Vor allem das mit der Bimetall-Scheibe 34 besonders kompakt bauende Umsteuerventil 33 begünstigt die Kraftstoffrückführung im Deckel 13 des Filters 10 ohne nennenswerten zusätzlichen Bauraum, wobei sämtliche Anschlüsse im wesentlichen in derselben radialen Ebene angeordnet werden können.

## Patentansprüche

1. Filter für Dieselkraftstoff mit einem in einem Gehäuse (11) angeordneten Filterelement (14), das zwischen einen Zulaufanschluß (22) und einen Ablaufanschluß (23) geschaltet ist und mit einer Einrichtung (31) zur temperaturabhängigen Umsteuerung der von einer Einspritzpumpe kommenden, erwärmten Überströmmenge in einen Kraftstofftank und/oder zur Schmutzseite des Filterelements, wozu in einem Deckel (13) des Gehäuses (11) ein dritter, die Überströmmenge der Einspritzpumpe erhaltender Anschluß (28) und ein vierter, zum Tank entlastender Anschluß (29) angeordnet sind und mit einer Entlüftungsvorrichtung (32) zum Abführen von Gaseinschlüssen aus der Überströmmenge zum Tank, wobei die Einrichtung (31) zur temperaturabhängigen Umsteuerung, die mit einem Bimetallelement arbeitet, und die Entlüftungsvorrichtung (32) mit dem Deckel (13) des Filters (10) integriert sind, dadurch gekennzeichnet, daß das Filter als Leitungsfilter (10) ausgebildet ist, bei dem der Deckel (13) und ein das Filterelement (14) aufnehmendes, becherförmiges Gehäuseteil (12) unlösbar miteinander verbunden sind, wobei der Deckel (13) aus relativ dünnwandigem Material besteht und daß der Deckel (13) mit einem zusätzlichen, im Innern des Gehäuses angeordneten, gehäusefesten Bauelement (25) im Bereich einer gewölbten Ausformung (24) eine Kammer (26) bildet, in die der dritte (28) und der vierte Anschluß (29) führen und die über ein zur Schmutzseite (19) des Filterelements (14) hin öffnendes Drucksteuerventil (39) mit der Schmutzseite Verbindung hat und daß die Kammer (26) die Einrichtung (31) und die Entlüftungsvorrichtung (32) aufnimmt, wobei das Bimetallelement als Schnappscheibe (34) ausgebildet ist.

2. Filter nach Anspruch 1, dadurch gekennzeichnet, daß der dritte (28) und der vierte Anschluß (29) in Längsachse des Filters (10) gesehen im wesentlichen in der gleichen radialen Ebene wie der Zulauf- und der Ablaufanschluß (22, 23) liegen.

3. Filter nach einem der Ansprüche 1 bis 2, dadurch gekennzeichnet, daß der Deckel (13) aus Stahlblech besteht.

4. Filter nach einem oder mehreren der Ansprüche 1 bis 3, dadurch gekennzeichnet, daß die Ausformung (24) im Deckel (13) kreisförmig und das zusätzliche Bauelement eine ebene Abdeckplatte (25) ist.

5. Filter nach einem oder mehreren der Ansprüche 1 bis 4, dadurch gekennzeichnet, daß die Bimetallscheibe (34) als bewegliches Steuerglied eines Umsteuerventils (33) dient, das in die Verbindung zwischen den dritten (28) und vierten Anschluß (29) geschaltet ist.

6. Filter nach Anspruch 5, dadurch gekennzeichnet, daß das Drucksteuerventil (39) parallel zum Umsteuerventil (33) zwischen dem dritten Anschluß (28) und der Schmutzseite (19) liegt.

7. Filter nach einem oder mehreren der Ansprüche 1 bis 6, dadurch gekennzeichnet, daß der vierte Anschluß (29) zentrisch in der Ausformung (24) angeordnet ist und der dritte Anschluß (28) am Rande der Ausformung (24) und schräg zur Längsachse des Filters (10) in die Kammer (26) führt.

8. Filter nach Anspruch 7, dadurch gekennzeichnet, daß ein in die Kammer (26) führender Rohrstutzen des vierten Anschlusses (29) zusammen mit der Ausformung (24) einen Dichtring (35) halten, der den Ventilsitz für die Bimetall-Schnappscheibe (34) bildet.

9. Filter nach einem oder mehreren der Ansprüche 1 bis 8, dadurch gekennzeichnet, daß die Bimetallschnappscheibe (34) mit ihrem äußeren Rand zwischen einer Schulter (37) am Deckel (13) und einer Haltefeder (36) liegt, die insbesondere an der Abdeckplatte (25) montiert ist.

10. Filter nach einem oder mehreren der Ansprüche 4 bis 9, dadurch gekennzeichnet, daß an der Abdeckplatte (25) das Drucksteuerventil (39) befestigt ist, das insbesondere als Plattenventil ausgebildet ist.

11. Filter nach einem oder mehreren der Ansprüche 1 bis 10, dadurch gekennzeichnet, daß die als Entlüftungsvorrichtung dienende Drosselöffnung (38) zentrisch in der Bimetallscheibe (34) liegt.

12. Filter nach einem oder mehreren der Ansprüche 1 bis 11, dadurch gekennzeichnet, daß der Ablaufanschluß (23) in der Längsachse des Filters (10) zentrisch im Deckel (13) angeordnet ist und der Zulaufanschluß (22) einerseits und andererseits die Ausformung (24) mit dem dritten (28) und vierten Anschluß (29) diametral dazu liegen.

## Claims

1. Diesel fuel filter with a filter element (14), which is arranged in a housing (11) and is connected between an inflow connection (22) and an outflow connection (23), and with a device (31) for the temperature-dependent reversal of the heated overflow quantity coming from an injection pump into a fuel tank and/or to the soiled side of the filter element, for which purpose a third connection (28), receiving the overflow quantity of the injection pump, and a fourth connection (29), discharging to the tank, are arranged in a cover (13) of the housing (11), and with a venting device (32) for the removal of gas inclusions from the overflow quantity to the tank, the device (31) for temperature-dependent reversal, which operates with a bimetal element, and the venting device (32) being integrated with the cover (13) of the filter (10), characterized in that the filter is designed as a line filter (10), on which the cover (13) and a cup-shaped housing part (12), receiving the filter element (14), are undetachably interconnected, the cover (13) consisting of relatively thin-walled material, and in that the cover (13) forms in the region of a convex formation (24), with an additional component (25) arranged fixedly inside the housing, a chamber 26, into which the third (28) and the fourth connection (29) lead and which is connected via a pressure control valve (39), opening towards the soiled side (19) of the filter element (14), with the soiled side, and in that the chamber (26) receives the device (31) and the venting device (32), the bimetal element being designed as a snap disc (34).

2. Filter according to Claim 1, characterized in that, the third (28) and the fourth connection (29) lie substantially in the same radial plane seen in the longitudinal axis of the filter (10), as the inflow and outflow connections (22, 23).

3. Filter according to one of Claims 1 to 2, characterized in that the cover (13) consists of steel sheet.

4. Filter according to one or more of Claims 1 to 3, characterized in that the formation (24) in the cover (13) is circular and the additional component is a flat cover plate (25).

5. Filter according to one or more of the Claims 1 to 4, characterized in that the bimetal disc (34) serves as a moving control element of a reversing valve (33), which is connected into the connection between the third (28) and the fourth connection (29).

6. Filter according to Claim 5, characterized in that the pressure control valve (39) lies parallel to the reversing valve (33) between the third connection (28) and the soiled side (19).

7. Filter according to one or more of Claims 1 to 6, characterized in that the fourth connection (29) is arranged centrally in the formation (24) and the third connection (28), at the edge of the formation (24) and oblique to the longitudinal axis of the filter (10), leads into the chamber (26).

8. Filter according to Claim 7, characterized in that a socket, leading into the chamber (26), of the fourth connection (29) retains, together with the formation (24), a sealing ring (35), which forms the valve seat for the bimetal snap disc (34).

9. Filter according to one or more of Claims 1 to 8, characterized in that the bimetal snap disc (34) lies with its outer edge beteeen a shoulder (37) on the cover (13) and a retaining spring (36), which is fitted in particular on the cover plate (25).

10. Filter according to one or more of Claims 4 to 9, characterized in that the pressure control valve (39), which is designed in particular as a plate valve, is fixed on the cover plate (25).

11. Filter according to one or more of Claims 1 to 10, characterized in that the restricting opening (38), serving as venting device, lies centrally in the bimetal disc (34).

12. Filter according to one or more of Claims 1 to 11, characterized in that the outflow connection (23) is arranged centrally in the cover (13) in the longitudinal axis of the filter (10), and the inflow connection (22) on the one hand and the formation (24) with the third (28) and the fourth connection (29) on the other hand lie dimetrically to this.

**Revendications**

1. Filtre pour carburant Diesel, comprenant un élément de filtre (14) disposé dans un carter (11), élément qui est branché entre un raccordement d'alimentation (22) et un raccordement d'évacuation (23) et avec un dispositif (31), pour l'inversion, en fonction de la température, du sur-débit de décharge, réchauffé, venant d'une pompe d'injection, dans un réservoir de carburant et/ou vers le côté encrassé de l'élément de filtre, un troisième raccordement (28), recevant le sur-débit de décharge de la pompe d'injection, et un quatrième raccordement (29), se déchargeant vers le réservoir de carburant, sont disposés dans un couvercle (13) du carter (11), et avec un dispositif de désaération (32), pour évacuer les inclusions de gaz, hors du sur-débit de décharge allant vers le réservoir, le dispositif (31) d'inversion en fonction de la température, qui travaille avec un élément bimétallique, et le dispositif de désaération (32) sont intégrés au couvercle (13) du filtre (10), caractérisé en ce que le filtre est réalisé comme un filtre à placer dans une tuyauterie (10), pour lequel le couvercle (13) et une partie de carter (12) en forme de godet, logeant l'élément de filtre (14), sont reliés ensemble, de manière indémontable, le couvercle (13) étant à cette occasion composé de matériau d'épaisseur relativement mince, et en ce que le couvercle (13), avec un élément constructif (25) supplémentaire, rigide par rapport au carter, disposé à l'intérieur du carter, forme une chambre (26), dans la zone d'une excroissance (24) bombée, chambre dans laquelle conduisent le troisième (28) et le quatrième raccordement (29), et qui possède une liaison avec le côté encrassé, par une soupape de commande de pression (39) ouvrant vers le côté encrassé (19) de l'élément de filtre (14), et en ce que la chambre (26) loge le dispositif (31) et le dispositif de désaération (32), l'élément bimétallique étant à cette occasion réalisé sous la forme d'un disque à déclic (34).

2. Filtre selon la revendication 1, caractérisé en ce que le troisième (28) et le quatrième raccordement (29), vus selon l'axe longitudinal du filtre (10), sont situés principalement dans le même plan radial que les raccordements d'alimentation et d'évacuation (22, 23).

3. Filtre selon l'une des revendications 1 et 2, caractérisé en ce que le couvercle (13) est composé de tôle d'acier.

4. Filtre selon une ou plusieurs des revendiations 1 à 3, caractérisé en ce que l'excroissance (24) située sur le couvercle (13) est circulaire et que l'élément constructif supplémentaire est une plaque de recouvrement (25) plate.

5. Filtre selon une ou plusieurs des revendications 1 à 4, caractérisé en ce que le disque bimétallique (24) situé dans le couvercle (13) sert d'organe de commande mobile d'une soupape d'inversion (33), qui est branchée dans la liaison située entre le troisième (28) et le quatrième raccordement (29).

6. Filtre selon la revendication 5, caractérisé en ce que la soupape de commande de pression (39) est située en parallèle à la soupape d'inversion (33), entre le troisième raccordement (28) et le côté encrassé (19).

7. Filtre selon une ou plusieurs des revendications 1 à 6, caractérisé en ce que le quatrième raccordement (29) est disposé centralement, dans l'excroissance (24) et que le troisième raccordement (28) conduit dans la chambre (26), sur le bord de l'excroissance (24), et en biais, par rapport à l'axe longitudinal du filtre (10).

8. Filtre selon la revendication 7, caractérisé en ce que la tubulure du quatrième raccordement (29), conduisant dans la chambre (26), ensemble avec l'excroissance (24), maintiennent une bague d'étanchéité (35), qui forme le siège de soupape, pour le disque à déclic (34) bimétallique.

9. Filtre selon une ou plusieurs des revendications 1 à 8, caractérisé en ce que le disque à déclic (34) bimétallique avec son bord extérieur, est situé entre un épaulement (37) situé sur le couvercle (13) et un ressort de maintien (36), qui est monté en particulier sur la plaque de recouvrement (25).

10. Filtre selon une ou plusieurs des revendications 4 à 9, caractérisé en ce que la soupape de commande de pression (39) est fixée sur la plaque de recouvrement (25) et est en particulier réalisée sous forme de soupape à plaque.

11. Filtre selon une ou plusieurs des revendications 1 à 10, caractérisé en ce que l'orifice d'étranglement (38) servant de dispositif de désaération est situé centralement dans le disque bimétallique (34).

12. Filtre selon une ou plusieurs des revendications 1 à 11, caractérisé en ce que le raccordement d'évacuation (23) est disposé centralement dans le couvercle (13), dans l'axe longitudinal du filtre (10), et que le raccordement d'alimentation (22) d'une part et l'excroissance (24) d'autre part, sont situés diamètralement par rapport à eux, avec le troisième (28) et le quatrième raccordement (29).

# FIG.1

FIG.4

FIG.3

FIG.2